# EUROPEAN PATENT SPECIFICATION

(11) **EP 2 267 624 B1**
(45) Date of publication and mention of the grant of the patent: **12.07.2017**
(21) Application number: 10184880.2
(22) Date of filing: 18.04.2005
(51) Int. Cl.: G06F 21/52, G06F 21/80, H04L 9/08, H04L 9/32

(54) **A generic framework for runtime interception and execution control of interpreted languages**
Generischer Framework für Laufzeitunterbrechung und Ausführungssteuerung interpretierter Sprachen
Structure générique pour interception en temps d'exécution et contrôle d'exécution de langages interpretés

(30) Priority: 19.04.2004 US 562982; 19.04.2004 US 562983; 23.04.2004 US 564579
(43) Date of publication of application: 29.12.2010
(62) Divisional of application: 05762158.3
(73) Proprietor: Lumension Security S.A., 8070 Bertrange (LU)
(72) Inventor: Usov, Viacheslav, L-8017, Strassen (LU)
(74) Representative: Hoarton, Lloyd Douglas Charles

(56) References cited:
- US-A1- 2002 099 952

## Description

### FIELD OF THE INVENTION

The present invention relates generally to the execution of interpreted code and more particularly to a security system that controls whether or not the interpreted code is allowed to be executed.

### DESCRIPTION OF THE RELATED ART

Cryptographic digests, public and symmetric key cryptography, and digital certificates are used extensively in order to identify executables and secure communication links between the configuration store and the protection module. A number of algorithms (SHA-1 for digests and certificates, RSA public key cryptography for certificates and secure communications, AES for secure communications) are in public domain and are employed by the system.

A technique for intercepting system services on the MS Windows NT family of operating systems involves overwriting ("patching") the system service table. The technique is in public domain.

The prior art also includes ad hoc techniques that intercept a number of known applications that use an interpreted language. They may not be able to handle interpreted languages when their target applications undergo a version change, and they are not able to handle the same interpreted language in all applications. Other systems may use less-secure interception methods.

US-A-2002/0099952 discloses a system and method that automatically, transparently and securely controls software execution.

The present invention seeks to provide an improved method and system for controlling execution of an interpreted computer language and an improved method and system for setting up an intercept structure.

According to one aspect of the present invention, there is provided a method for controlling execution of an interpreted computer language as defined in claim 1 hereinafter.

According to a further aspect of the present invention, there is provided a system for controlling execution of an interpreted computer language as defined in claim 2 hereinafter.

An embodiment of the invention controls execution of interpreted code. The protection system may be configured by system administrators to allow or disallow an interpreted language, or to function in a "pass-through" mode (see bellow), for all interpreted languages (known to the system) or on a per language basis. The invention extends the security framework of contemporary computer operating systems and relies on the operating system to provide system services to load and/or execute standalone executable modules. The invention interacts with the operating system's vendor-supplied or third-party modules that enable applications to use interpreted languages.

When in the "pass-through" mode, the decision to execute a particular interpreted program (script or macro) is delegated to users, and, optionally, is recorded and then automatically applies to the same program in subsequent invocations.

The privileged protection modules ensures that a script engine is always handled by a script engine helper module.

The use of cryptographic digests and text metric algorithms enables the users and administrators to identify safe and unsafe interpreted language code and handle it accordingly, without disturbing the user. This also allows a purely white-list list procedure, where only known-safe code is allowed and everything else is denied.
or invocation request, in step210, to the script engine, or otherwise cancels the request, in step 212, in an appropriate way.

### Authorization module

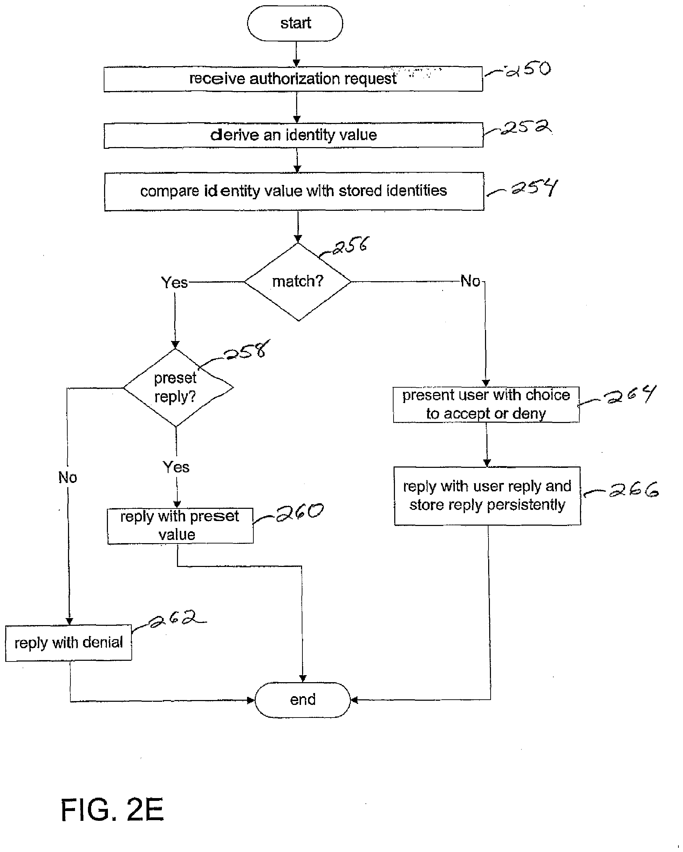

Referring to FIG.2E, the authorization module may be a system of interacting modules. In the simplest case, it is a user-mode application executing in the context of the same user. If the authorization module is in the allow-all or deny-all mode for the user, the request is responded to accordingly. When interpreted code is received as a part of an authorization request in step 250, the code may be used to derive, in step 252, a cryptographic digest, or some other identity value (e.g., by algorithms that measure textual proximity). This identity value is compared, in step 254, with the list of permanently authorized or denied identities, which is stored persistently by the authorization module. If a match is found (or the code is evaluated has similar by text-metric algorithm), as determined in step 256, and if a preset reply is found, as determined in step 258, the preset reply is retrieved from the persistent data, in step 260. If no preset reply is found, as determined in step 258, and the authorization module is not in the ask-user mode, a negative reply is sent, in step 262. Otherwise, the code and the information on the code are shown to the user, in step 264, which is the pass-through mode. The user determines whether the code is do be allowed or denied, in step 266. The user may also specify that the reply be associated persistently with the identity of the code (whereupon the identity and the reply are stored permanently).

### BRIEF DESCRIPTION OF THE DRAWINGS

These and other features, aspects and advantages of the present invention will become better understood with regard to the following description, appended claims, and accompanying drawings where:
FIG. 1A is a system diagram of the present invention;
FIG. 1B is a diagram of a typical computer system; and
FIGs. 2A-2E are flow charts showing a method in accordance with an embodiment of the present invention.

### DETAILED DESCRIPTION OF THE INVENTION

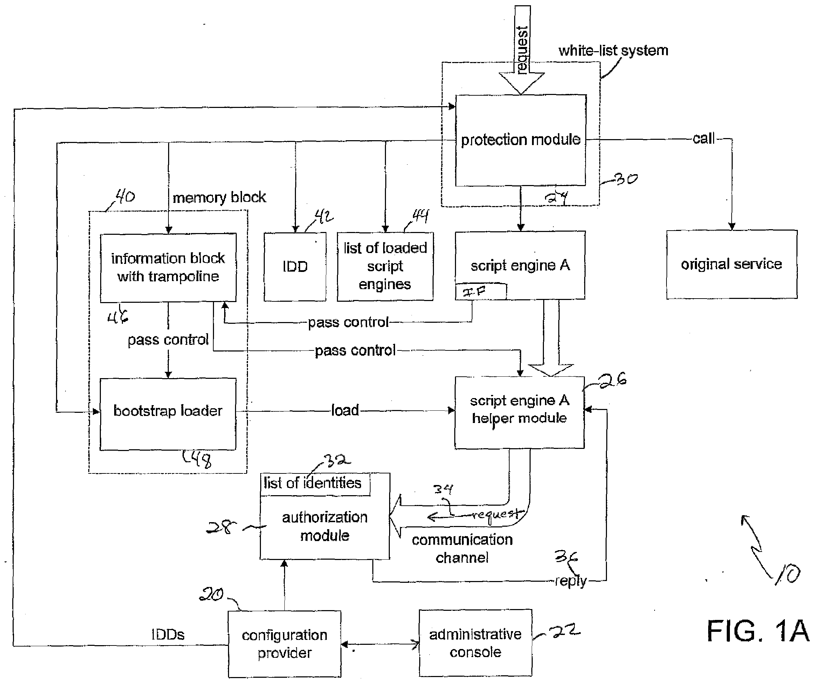

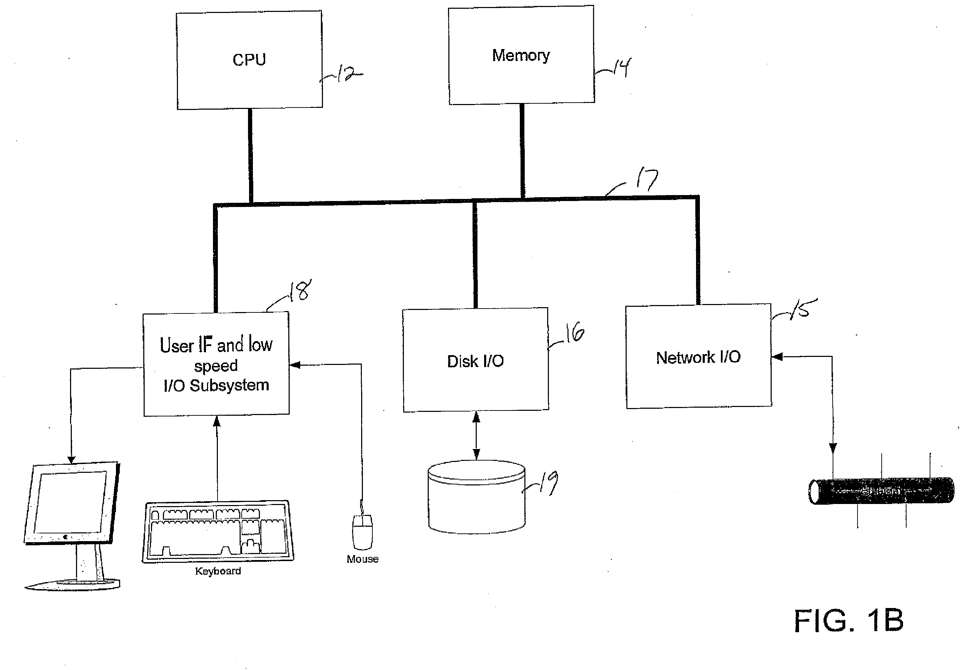

Referring to the system diagram of FIG. 1A, five standalone software components are included in the system 10: a configuration provider 20, an administrative console 22, a protection module 24, one or more script engine helper modules 26, and an authorization module 28. A white-list system 30 may optionally be present. The software components execute on an exemplary computer system, shown in FIG. 1B, that includes a processor 12, a memory 14, a mass storage subsystem 16, 19, a network subsystem 15, and user-oriented I/O 18, interconnected by a bus 17. The memory 14 and/or mass storage system 16, 19 store the instructions of the software components used for execution by the processor 12.

The configuration provider 20 is a means for storing the mode of the authorization module for users and security groups. The configuration provider may be provided by an operating system or by a standalone system.

The administrative console 22 is a set of instruments that the system administrators use to view and modify the configuration settings of the authorization module 28. If an IDD is allowed to be modified online, the administrative console 22 provides certain means for carrying that out.

The protection module 30 is a highly privileged module installed at the computers being protected. This module 30 intercepts the services that the operating system provides to load and execute executable files. When a service is intercepted, the module 30 matches the module against a set of IDDs, and if a match is found, intercepts it. The protection module may be, in fact, a task within the white-list system's protection module 30. The protection module interacts with a memory block, the IDDs 42, and a list 44 of loaded script engines. The memory block includes a information block 46 and a bootstrap loader 48.

Each script engine helper module 26 possesses intimate knowledge of the script engine it handles and interacts with the authorization module to determine whether code is authorized to be executed.

The authorization module 28 interacts with a database list of permanently authorized or denied identities 32 of language code to be executed. It receives an authorization request 34 and derives a unique identity value for language code associated with the authorization request. The authorization component compares the unique identity value with the list and generates a reply 36 to the authorization request.

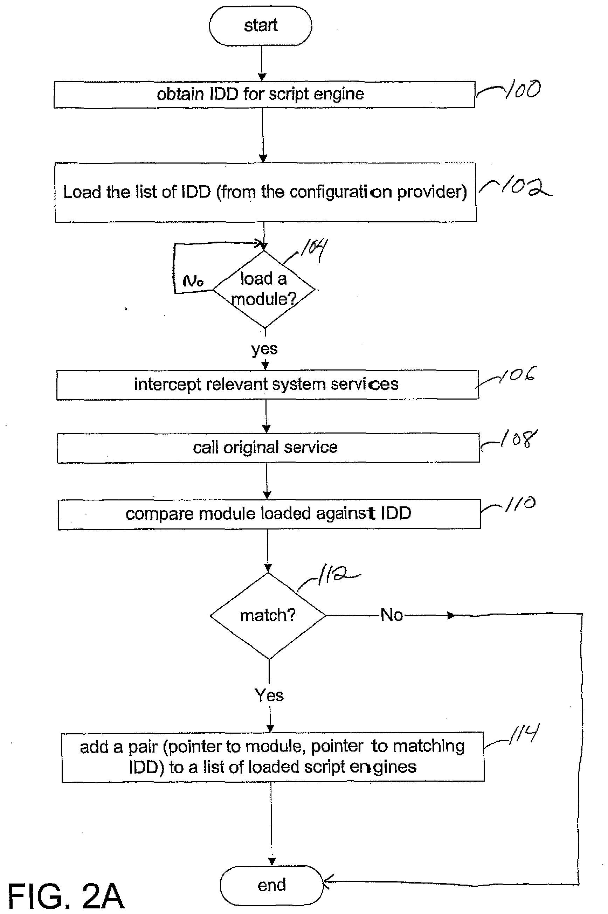

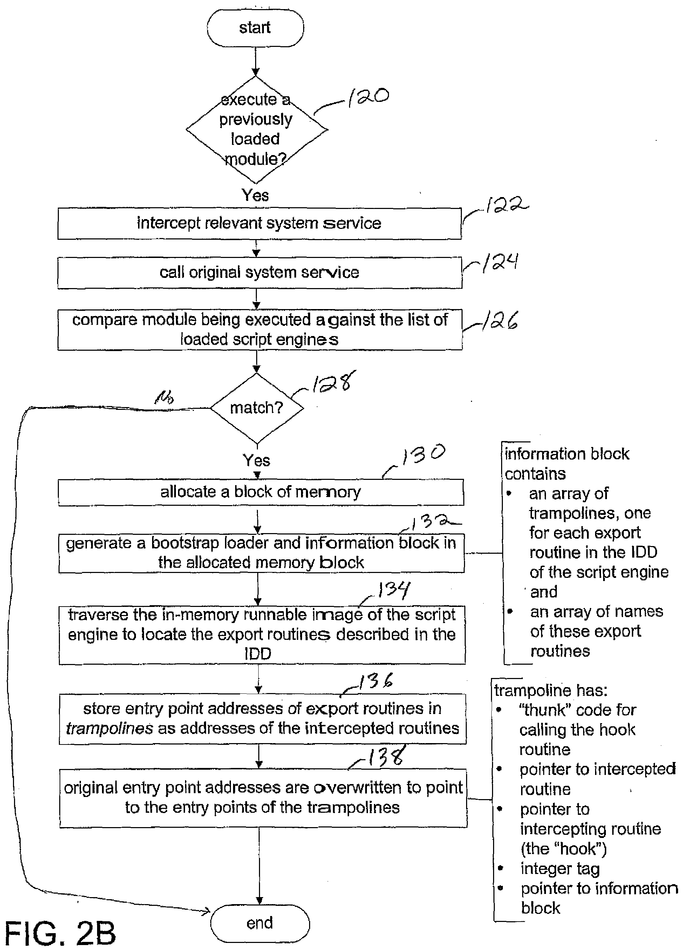

There are four major tasks to be performed in a process in accordance with an embodiment of the present invention. The first major task, performed by the protection module, is the identification of a script engine and the injection of interception code and data into the process loading the script engine. This is illustrated in FIGs. 2A and 2B. For the Windows NT family of operating system, this involves intercepting two different system services, create section and map section.

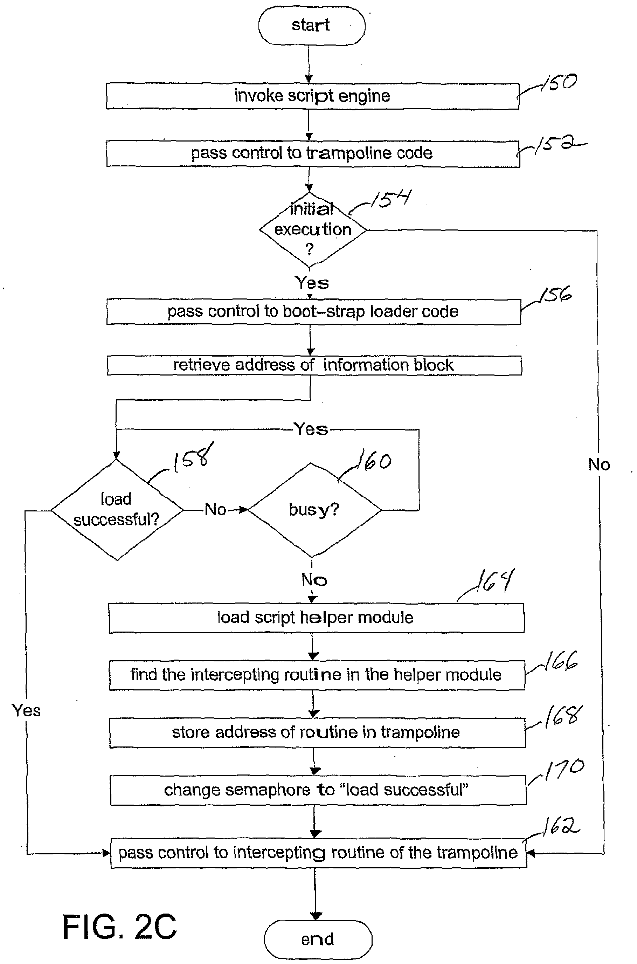

The second major task, which is performed by the injected trampolines and the bootstrap loader, is the interception of the script engine interface and the loading of the script helper during the first intercepted call. This is illustrated in FIG. 2C. In this task, a bo otstrap sequence is commenced, a script helper is loaded and then called.

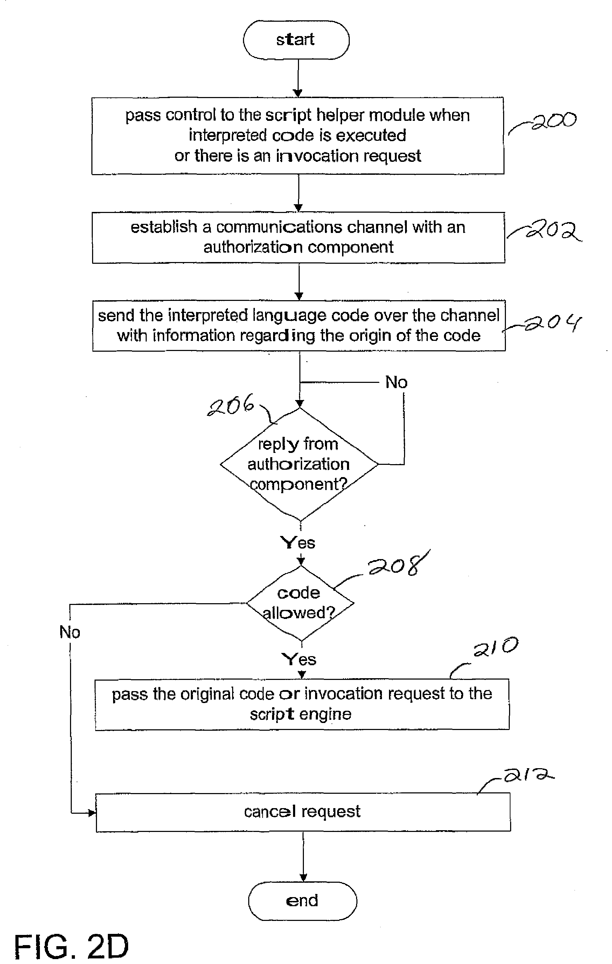

In the third major task, shown in FIG. 2D, the language specific (or script engine-specific) interception occurs.

The fourth major task, illustrated in FIGs. 2D and 2E and performed by the authorization module, is the checking and authorization of intercepted scripts.

Referring to FIG. 2A, the intercept of script engines is described in more detail. To intercept a script engine, it must be identifiable and known to the protection system. Script engines may be identified by their file names, filesystem or network location, or their cryptographic digests, via the script engine registration information (if supported by the operating system). There are also certain descriptive data associated with each script engine. Thus, each script engine is associated with certain Identification and Description Data (IDD). In step 100, the IDD for a script engine is obtained and the list of IDDs is loaded, in step 102. The IDD may be hardcoded or changeable. For each script engine, the IDD contains a location or image of a script engine helper module and a list of export routines that must be intercepted. When an attempt to load a a module (create a section object for the Windows NT family of operation systems) takes place in step 104, the relevant system services are intercepted in step 106, by the privileged protection module, which then calls, in step 108, the original service and matches, in step 110, the module being loaded against the IDD. If a match is found, as determined in step 112, a pointer to the module and a pointer to its IDD are added, in step 114, to a list of loaded script engines. If there is no match found in step 112, the module being loaded is not a known script engine. In this case, the protection module simply returns control.

Referring to FIG. 2B, when an attempt to execute a previously loaded module (map a section object for the Windows NT family of operating systems) takes place as determined in step 120, the relevant system service is intercepted, in step 122, by the privileged protection module, which then calls, in step 124, the original service, and matches, in step 126, the module being executed against the list of loaded script engines. If a match is found as determined in step 128, a block of memory is allocated, in step 130, in the process executing the script engine, a boot-strap loader and information block is generated, in step 132, in the allocated block, the in-memory runnable (mapped) image of the script engines is traversed and the export routines described in the IDD are located, in step 134. The entry point addresses of the export routines are then stored, in step 136, in the trampolines as addresses of the intercepted routines and the original export entry point addresses are then overwritten, in step 138, to point to the entry points of the trampolines. This ensures that, whenever an intercepted export routine is called, control is diverted to an associated trampoline. The information block that was generated contains an array of trampoline structures, one for each export routine in the IDD of the script engine, and an array of the names of these export routines. Each trampoline structure includes five fields, (i) a "thunk" code, which calls a "hook" routine, passing itself as an additional parameter, (ii) an address field for pointing to the "original" (intercepted) routine, (iii) an address field for pointing to the "hook" (intercepting routine), (iv) an integer "tag" field, and (v) an address field for pointing to the boot-strap information block. The pointer to the "hook" initially points to the bootstrap code and then to the corresponding routine in the script helper. Each trampoline also contains a short sequence of executable code (see below).

Referring to FIG. 2C, when the script engine is invoked, in step 150, through an intercepted export routine, the trampoline receives control, in step 152. The trampoline code retrieves the address of the trampoline and then transfers control at the address of the intercepting routine, passing the address of the trampoline as a parameter (the parameters that may have been specified by the caller of the export routine are preserved as well). Initially, all the trampolines have the address of the boot-strap loader as the address of the intercepting routine, thus the boot-strap loader receives control, in step 156. The boot-strap loader retrieves the address of the information block, in step 158, and performs an atomic compare-exchange on a semaphore variable stored in the block. If the semaphore signals that the boot-strap loader has executed successfully, as determined in step 158, the loader simply transfers control, in step 162, to the intercepting routine of the trampoline (the address of which is passed as a parameter). If the semaphore signals that the boot-strap loader is executing (in another thread), as determined in step 158, it performs a (busy) wait on the semaphore, in step 160, until the semaphore signals a successful load, as determined in step 158, and transfers control to the intercepting routine of the trampoline, in step 162. Otherwise, if the semaphore signals that a load has not been attempted yet, as determined in step 160, it starts the load sequence.

Continuing with FIG. 2C, the load sequence proceeds as follows. The script engine helper module, whose location or image is contained in the bootstrap information block, is loaded in step 164. For each intercepted export routine, an intercepting routine in the script engine helper module is found, in step 166, and its address is stored, in step 168, as the address of the intercepting routine in the trampoline. The semaphore is set to a "load successful" state, in step 170, and execution is transferred, in step 162, to the intercepting routine of the trampoline that was passed as a parameter to the boot-strap loader.

### Script engine helper execution

Each script engine helper module possesses intimate knowledge of the script engine it handles. Both execute within the same process; thus, the helper module may easily use a host of well-known "hooking" and "patching" techniques. Typically, the number of the export routines in the IDD (intercepted before the helper module loads) is small. They are normally the routines that are executed by the script engine user to initialize the script engine and/or retrieve a programming interface relating to the functionality of the script engine. The other routines that must be intercepted are intercepted by the helper module when the IDD-intercepted routines execute. This keeps the IDD small and the script engine interception logic localized in the helper module.

Referring now to FIG. 2D, eventually, a script engine helper module intercepts, in step 200, an interpreted language code (script or macro) load or invocation request. At this stage, the helper module has access to the interpreted language code. The helper module establishes a communication channel, in step 202, with an authorization component, sends the interpreted language code over the channel, in step 204, together with information on the origin of the code (the application that has loaded the code, the filesystem or network location the code has been loaded from, etc.) and awaits a reply, in step 206, from the authorization component. The reply either allows or denies the execution of the code. If the code is allowed, as determined in step 208, the script engine helper module passes the original load or invocation request, in step210, to the script engine, or otherwise cancels the request, in step 212, in an appropriate way.

### Authorization module

Referring to FIG.2E, the authorization module may be a system of interacting modules. In the simplest case, it is a user-mode application executing in the context of the same user. If the authorization module is in the allow-all or deny-all mode for the user, the request is responded to accordingly. When interpreted code is received as apart of an authorization request in step 250, the code may be used to derive, in step 252, a cryptographic digest, or some other identity value (e.g., by algorithms that measure textual proximity). This identity value is compared, in step 254, with the list of permanently authorized or denied identities, which is stored persistently by the authorization module. If a match is found (or the code is evaluated as similar by text-metric algorithms), as determined in step 256, and if a preset reply is found, as determined in step 258, the preset reply is retrieved from the persistent data, in step 260. If no preset reply is found, as determined in step 258, and the authorization module is not in the ask-user mode, a negative reply is sent, in step 262. Otherwise, the code and the information on the code are shown to the user, in step 264, which is the pass-through mode. The user determines whether the code is do be allowed or denied, in step 266. The user may also specify that the reply be associated persistently with the identity of the code (whereupon the identity and the reply are stored permanently).

Although the present invention has been described in considerable detail with reference to certain preferred versions thereof, other versions are possible. Therefore, the spirit and scope of the appended claims should not be limited to the description of the preferred versions contained herein.

## Claims

1. A method for controlling execution of an interpreted computer language, the method comprising:
determining that statements of the interpreted computer language are attempting execution or there is an invocation request to execute said statements;
setting up an intercept structure by:
traversing an in-memory runnable image of an identified script engine for the interpreted computer language to locate routines described in an information block associated with the identified script engine, the routines being routines that must be intercepted;
storing entry point addresses of the routines that must be intercepted in a trampoline structure (46); and
overwriting the original entry point addresses in the identified script engine to be the entry points of the trampoline structure (46), wherein the trampoline structure (46) includes at least one of the address of the intercepted routine, the address of the intercepting routine, the address of a boot-strap block, an integer tag and a short sequence of code; wherein the method further comprises:
intercepting the statements or invocation request and passing control to a script helper module (26) in response to the identification of the script helper module (26) associated with the identified script engine that interprets statements of the computer language, each script helper module (26) of a plurality of script helper modules (26) being associated with a script engine;
sending the interpreted language statements over a communications channel to an authorization component (28) with information regarding the origin of the statements;
receiving a reply from the authorization component (28) to allow or deny the execution of the statements;
passing the original statements or invocation request to the identified script engine, responsive to receiving a reply to allow the execution of the statements; and
cancelling the attempting execution of invocation request, responsive to receiving a reply to deny the execution of the statements.

2. A system for controlling execution of an interpreted computer language, the system being programmed to perform the method of claim 1.

## Patentansprüche

1. A Verfahren zur Ausführungssteuerung einer interpretierten Computersprache, wobei das Verfahren umfasst:
Bestimmen, dass Aussagen der interpretierten Computersprache die Ausführung versuchen oder, dass eine Aufrufanforderung vorliegt, die Aussagen auszuführen; Erstellen einer Abfangstruktur durch:
Traversieren einer im Speicher ablauffähigen Abbildung einer identifizierten Skript-Engine für die interpretierte Computersprache, um Routinen ausfindig zu machen, die in einem Informationsblock beschrieben sind, der mit der identifizierten Skript-Engine assoziiert sind, wobei es sich bei den Routinen um Routinen handelt, die abgefangen werden müssen; Speichern von Eingangspunktadressen der Routinen, die in einer Trampolin-Struktur (46) abgefangen werden müssen; und
Überschreiben der originalen Eingangspunktadressen in der identifizierten Skript-Engine, um die Eingangspunkte der Trampolin-Struktur (46) zu sein, wobei die Trampolin-Struktur (46) mindestens die Adresse der abgefangenen Routine, die Adresse der abfangenden Routine, die Adresse eines Boot-Strap-Blocks, ein Ganzzahl-Tag und eine kurze Sequenz von Code einschließt; wobei das Verfahren ferner umfasst:
Abfangen der Aussagen oder Aufrufanforderungen und Übergeben der Steuerung an ein Skript-Helfermodul (26) als Antwort auf die Identifikation des Skript-Helfermoduls (26), das mit der identifizierten Skript-Engine assoziiert ist, welche die Aussagen der Computersprache interpretiert, wobei jedes Skript-Helfermodul (26) einer Vielzahl von Skript-Helfermodulen (26) mit einer Skript-Engine assoziiert ist;
Senden der interpretierten Sprachaussaugen über einen Kommunikationskanal an eine Autorisierungskomponente (28) mit Information hinsichtlich des Ursprungs der Aussagen;
Empfangen einer Antwort von der Autorisierungskomponente (28), um die Ausführung der Aussagen zuzulassen oder zu verweigern;
Übergeben der originalen Aussagen oder der Aufrufanforderung an die identifizierte Skript-Engine, reagierend auf das Empfangen einer Antwort, um die Ausführung der Aussagen zuzulassen; und Annullieren der versuchenden Ausführung der Aufrufanforderung, reagierend auf eine Antwort die Ausführung der Aussagen zu verweigern.

2. System zur Steuerung der Ausführung einer interpretierten Computersprache, wobei das System programmiert ist, das Verfahren nach Anspruch 1 auszuführen.

## Revendications

1. Procédé de contrôle d'exécution d'un langage informatique interprété, le procédé comprenant les étapes consistant à :
déterminer que les états du langage informatique interprété tentent une exécution ou qu'une requête d'invocation pour exécuter lesdits états existe ; mettre en place une structure d'interception en effectuant les étapes consistant à :
traverser une image exécutable en mémoire d'un moteur de scripts identifié pour le langage informatique interprété afin de localiser des routines décrites dans un bloc d'informations associé au moteur de scripts identifié, les routines étant des routines devant être interceptées ; stocker des adresses de points d'entrée des routines qui doivent être interceptées dans une structure trampoline (46) ; et
recouvrir en écriture les adresses de points d'entrée dans le moteur de scripts identifié comme devant être les points d'entrée de la structure trampoline (46), ladite structure trampoline (46) comportant au moins une parmi l'adresse de la routine interceptée, l'adresse de la routine interceptante, l'adresse du bloc d'autoamorçage, une étiquette de nombre entier et une courte séquence de code ; le procédé comprenant en outre les étapes consistant à :
intercepter les états ou la requête d'invocation et passer la main à un module d'aide aux scripts (26) en réponse à l'identification du module d'aide aux scripts (26) associé au moteur de scripts identifié qui interprète les états du langage informatique, chaque module d'aide aux scripts (26) d'une pluralité de modules d'aide aux scripts (26) étant associé à un moteur de scripts ;
envoyer les états du langage interprété sur un canal de communications à un composant d'autorisation (28) avec des informations concernant l'origine des états ;
recevoir une réponse du composant d'autorisation (28) pour permettre ou pour refuser l'exécution des états ;
passer les états d'origine ou la requête d'invocation au moteur de scripts identifié, réceptif à la réception d'une réponse pour permettre l'exécution des états ; et annuler la tentative d'exécution de la requête d'invocation, réceptive à la réception d'une réponse pour refuser l'exécution des états.

2. Système de contrôle d'exécution d'un langage informatique interprété, le système étant programmé pour mettre en oeuvre le procédé de la revendication 1.
